# EUROPEAN PATENT SPECIFICATION

(11) **EP 2 881 236 B1**
(45) Date of publication and mention of the grant of the patent: **21.02.2018**
(21) Application number: 13195959.5
(22) Date of filing: 05.12.2013
(51) Int. Cl.: B29C 51/36, B29C 51/14, B29L 31/50, B29C 70/68, B29C 51/40, B29D 35/14, B29C 43/36

(54) **Molding machine for making thermoplastic composites**
Pressformmaschine zur Herstellung thermoplastischer Verbundwerkstoffe
Machine de moulage permettant de fabriquer des composites thermoplastiques

(43) Date of publication of application: 10.06.2015
(73) Proprietor: Chaei Hsin Enterprise Co., Ltd., 40761 Taichung City (TW)
(72) Inventor: Wang, Shui Mu, 40761 Taichung City (TW)
(74) Representative: Chaillot, Geneviève

(56) References cited:
- EP-A2- 1 216 807
- EP-A2- 2 103 420
- WO-A1-2011/159240
- US-A- 4 740 417
- US-A1- 2007 102 843
- US-A1- 2008 093 753

## Description

### FIELD OF THE INVENTION

The present invention relates to a molding machine for making thermoplastic composites.

### BACKGROUND OF THE INVENTION

A conventional molding machine for making thermoplastic composites contains a machine frame with an upper die, a lower die, and a heating device. The lower die has a plurality of curved pattern portions, and a thermoplastic film and a cloth material are cut and stacked on a top surface of the lower die. The heating device heats the thermoplastic film so that the thermoplastic film melts, and the upper die is covered on the cloth material and the thermoplastic film, thus pressing the cloth material and the thermoplastic film together.

However, the cloth material and the thermoplastic film cannot be pressed together tightly, and patterns on the thermoplastic film are not visible.

The present invention has arisen to mitigate and/or obviate the afore-described disadvantages.
US patent No. 4,740,417 A describes a mold for making a two-layer structure thermoplastic composite, wherein during producing the thermoplastic composite, a fabric is positioned over the mold, a thermoplastic substrate is heated and then deposited onto the fabric, and a vacuum is applied so that a plurality of vacuum holes suck the thermoplastic substrate and the fabric downwardly, hence the fabric and the thermoplastic substrate acquire the shape or contour of the mold.

### SUMMARY OF THE INVENTION

The primary object of the present invention is to provide a molding machine for making thermoplastic composites is capable of overcoming the shortcomings of the conventional molding machine for making thermoplastic composites. The objective of the invention is achieved by the moulding machine according to appended claim 1. Preferred embodiments are defined in the dependent claims.

To obtain the above objective, a molding machine for making thermoplastic composites provided by the present invention contains: a machine frame, a platform, a heating device, a vacuum means, and a gas barrier film.

The machine frame includes a working stage.

The platform is mounted on the working stage and includes a plurality of channels, and the plurality of channels communicate with each other, the platform also includes a curved pattern portion and plural tiny holes which are arranged on the top surface of the platform, and a connector fixed on one side thereof and communicating with the plurality of channels. The plurality of tiny holes are in communication with the plurality of channels.

The heating device is secured under the platform and heats a working material on a top surface of the platform.

The vacuum means is arranged in the machine frame and includes a pipe for coupling with the connector of the platform.

The gas barrier film is flaky and covers the top surface of the platform.

### BRIEF DESCRIPTION OF THE DRAWINGS

FIG. 1 is a perspective view showing the assembly of a molding machine for making thermoplastic composites according to a first embodiment of the present invention.
FIG. 2 is a side plan view showing the assembly of a platform of the molding machine for making thermoplastic composites according to the first embodiment of the present invention.
FIG. 3 is a perspective view showing the assembly of the platform of the molding machine for making thermoplastic composites according to the first embodiment of the present invention.
FIG. 4 is another perspective view showing the assembly of the platform of the molding machine for making thermoplastic composites according to the first embodiment of the present invention.
FIG. 5 is a perspective view showing the operation of the molding machine for making thermoplastic composites according to the first embodiment of the present invention.
FIG. 6 is a cross sectional view showing the operation of the molding machine for making thermoplastic composites according to the first embodiment of the present invention.
FIG. 7 is a perspective view showing the assembly of thermoplastic composites according to the first embodiment of the present invention.
FIG. 8 is a perspective view showing the assembly of a platform of the molding machine for making thermoplastic composites according to a second embodiment of the present invention.
FIG. 9 is a perspective view showing the assembly of a platform of the molding machine for making thermoplastic composites according to a third embodiment of the present invention.

### DETAILED DESCRIPTION OF THE PREFERRED EMBODIMENTS

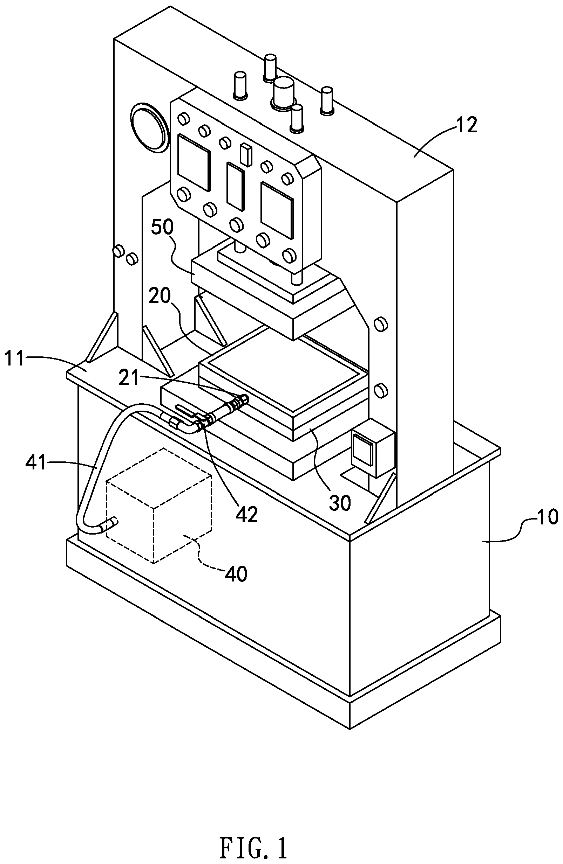

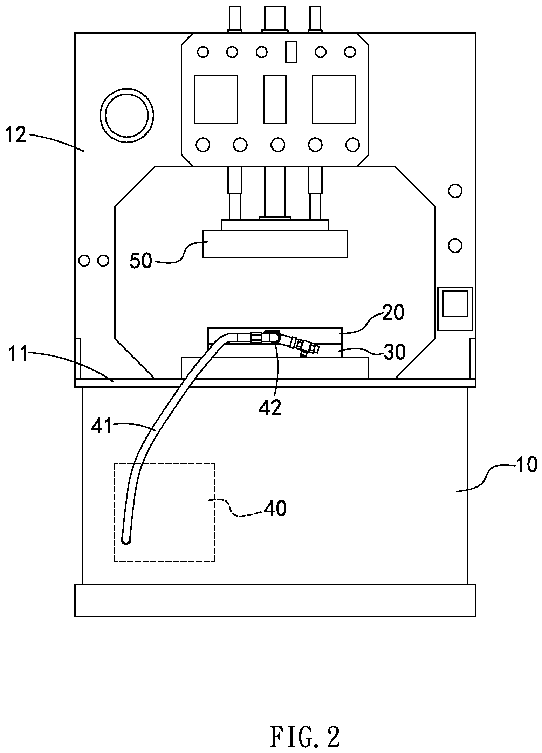

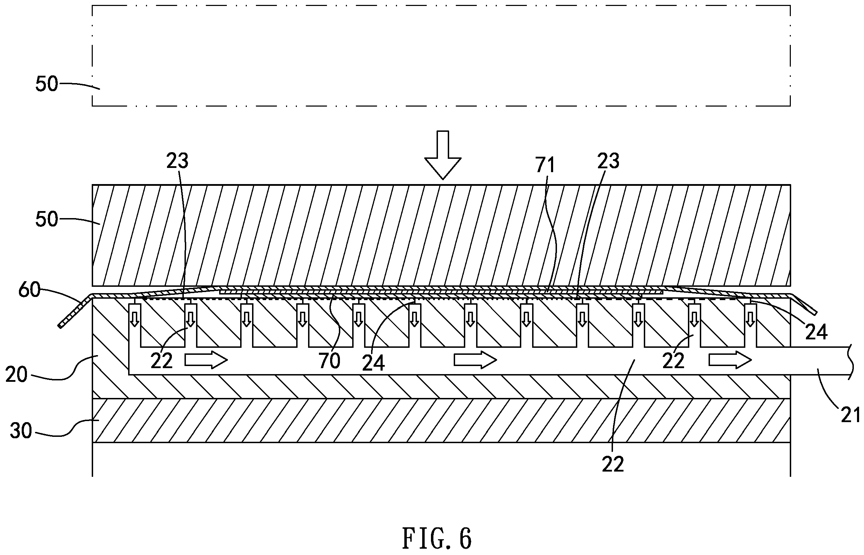

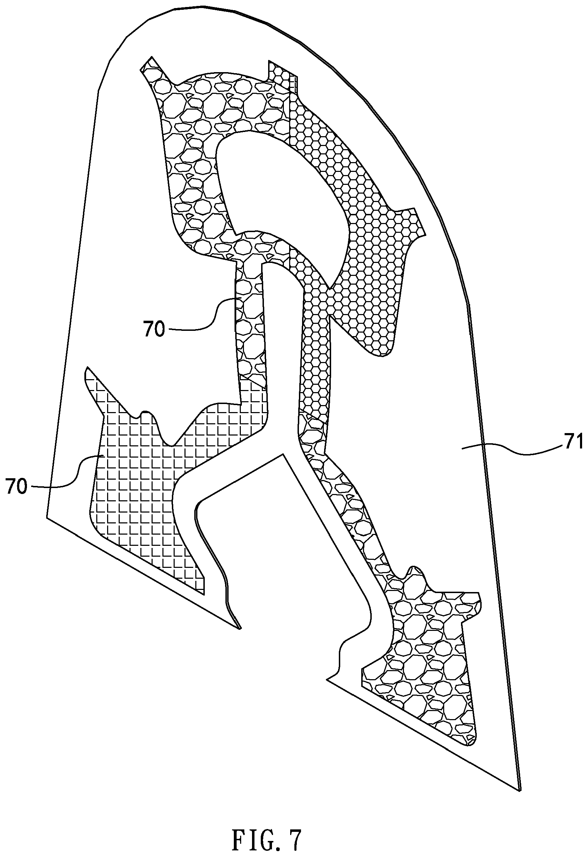

With reference to FIGS. 1-7, a molding machine for making thermoplastic composites according to a first embodiment of the present invention comprises: a machine frame 10, a platform 20, a heating device 30, a vacuum means 40, a pressing die 50, a gas barrier film 60.

The machine frame 10 includes a working stage 11 and a C-shaped rack 12 disposed on the working stage 11.

The platform 20 is mounted on the working stage 11 and includes a connector 21 fixed on one side thereof.

The heating device 30 is secured on a bottom end of the platform 20 and heats a working material on a top surface of the platform 20.

The vacuum means 40 is arranged in the machine frame 10 and includes a pipe 41 for coupling with the connector 21 of the platform 20 and a control valve 42 defined at a connecting position of the pipe 41 and the connector 21 so as to control air extraction.

The pressing die 50 is movably disposed on the C-shaped rack 12 and moves to and presses the top surface of the platform 20.

The gas barrier film 60 is flaky and made of rubber, silicone or plastic, and the gas barrier film 60 covers the top surface of the platform 20.

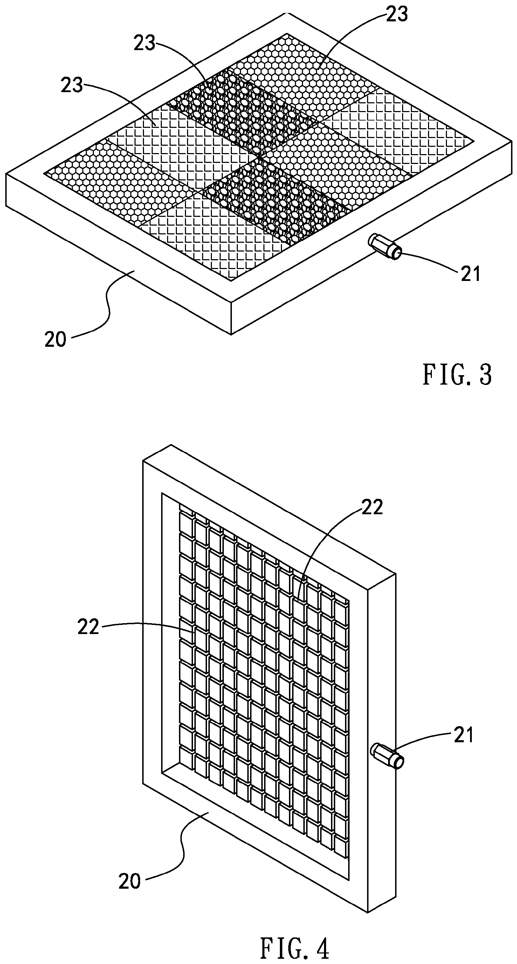

Referring further to FIGS. 3, 4, and 6, the platform 20 includes a plurality of channels 22, and the plurality of channels 22 communicate with each other. The platform 20 includes a curved pattern portion 23 and plural tiny holes 24 which are arranged on the top surface of the platform 20. The curved pattern portion 23 has a pattern or plural patterns and a plurality of separated areas.

A diameter of each tiny hole 24 is at least 0.001 mm, and the plurality of tiny holes 24 are arranged on the top surface of the platform 20 and are in communication with the plurality of channels 22. In addition, the connector 21 communicates with the plurality of channels 22 such that air in the plurality of channels 22 is drawn outwardly so that a negative pressure produces on the top surface of the platform 20.

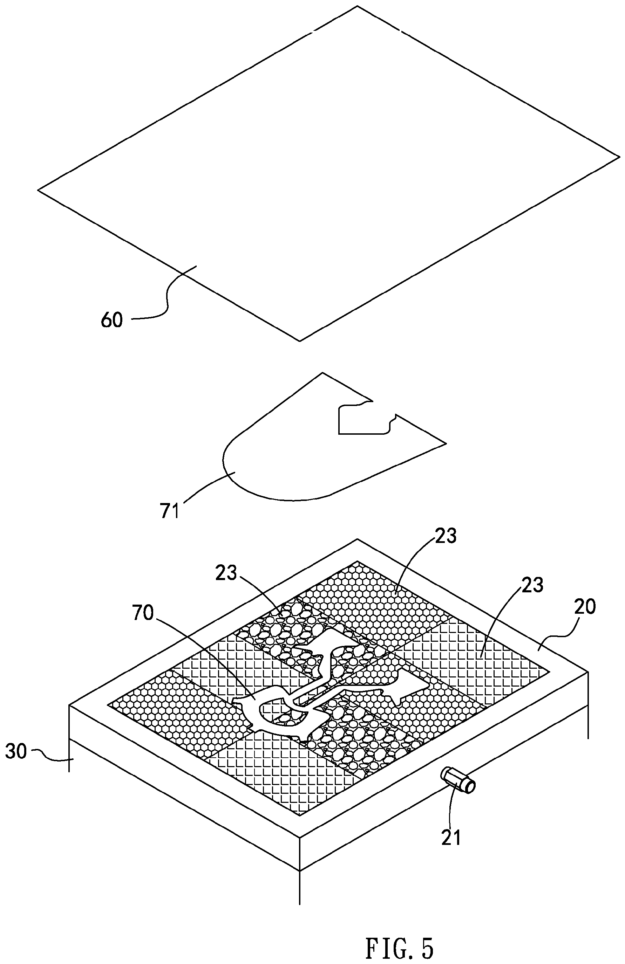

As shown in FIGS. 5 to 7, the working material includes a thermoplastic film 70 and a cloth material 71, wherein the thermoplastic film 70 has a first side surface and a second side surface, and the first side surface of the thermoplastic film 70 has high temperature resistance higher than that of the second side surface of the thermoplastic film 70. During producing the thermoplastic composite, the thermoplastic film 70 is placed on the top surface of the platform 20 and the first side surface thereof faces downwardly, the cloth material 71 is placed on the thermoplastic film 70, and the gas barrier film 60 is placed on the cloth material 71 so that the gas barrier film 60 covers the top surface of the platform 20 completely, thereafter the heating device 30 heats the thermoplastic film 70 so that the second side surface of the thermoplastic film 70 and one surface of the cloth material 71 contacting with the thermoplastic film 70 melt, and the first side surface of the thermoplastic film 70 softens, the control valve 42 is turned on so as to drive the vacuum means 40 to draw the air out of the plurality of channels 22 via the pipe 41, thereafter the plurality of tiny holes 24 suck the thermoplastic film 70 and the cloth material 71 downwardly, and a negative pressure lower than atmospheric pressure produces between the top surface of the platform 20 and the gas barrier film 60, hence the gas barrier film 60 presses the cloth material 71, and then the pressing die 50 moves downwardly so that an upper side of the gas barrier film 60 presses downwardly. Accordingly, a heating process, a pressing process, and a vacuuming process are finished simultaneously to produce thermoplastic composites comprised of the thermoplastic film 70 and the cloth material 20. In addition, the thermoplastic film 70 has three-dimensional patterns formed thereon obviously, and the gas barrier film 60 presses the cloth material 71 tightly without using the pressing die 50.

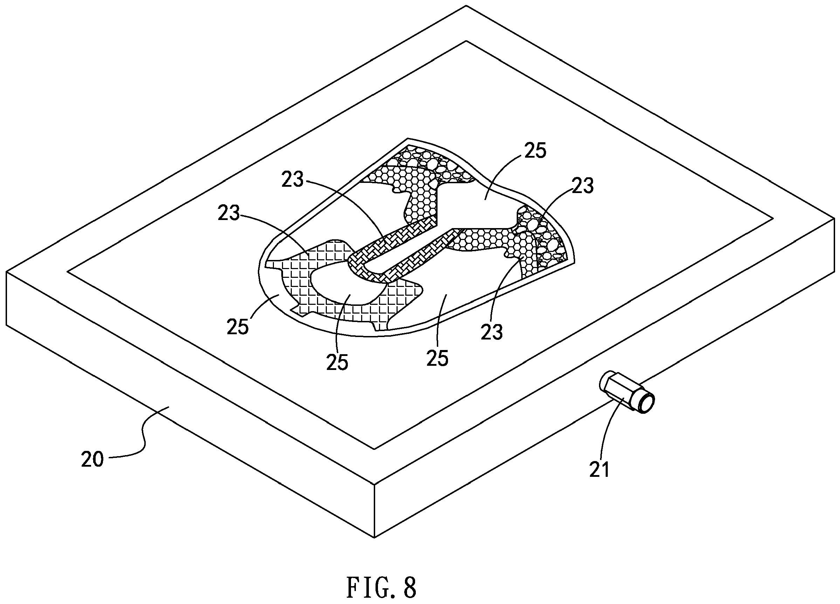

As illustrated in FIG. 8, a molding machine for making thermoplastic composites of a second embodiment from that of the first embodiment contains: a platform 20 including a plurality of forming areas 25 with different depths, plural curved pattern portions 23 with a plurality of patterns in a plurality of separated areas, and the plurality of patterns match with the plurality of forming areas 25 so as to produce a working pattern.

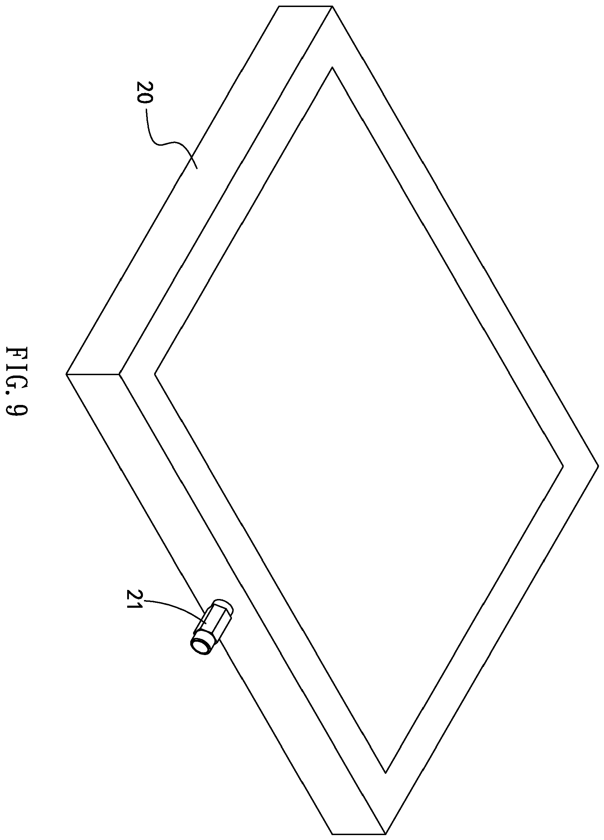

As shown in FIG. 9, a molding machine for making thermoplastic composites of a third embodiment from that of the first embodiment contains: a platform 20 without plural curved pattern portions 23, so the thermoplastic film 70 and the cloth material 71 contact with each other tightly.

Thereby, the thermoplastic composites of the present invention are applied in producing shoes, purses, and hats.

## Claims

1. A molding machine for making thermoplastic composites comprising:
a machine frame (10) including a working stage (11);
a platform (20) mounted on the working stage (11) and including a plurality of channels (22), and the plurality of channels (22) communicating with each other, the platform (20) also including a plurality of tiny holes (24) which are arranged on a top surface of the platform (20), the plurality of tiny holes (24) being in communication with the plurality of channels (22), a connector (21) fixed on one side thereof and communicating with the plurality of channels (22);
a heating device (30) secured on a bottom end of the platform (20), between the working stage (11) and the platform (20), and suitable to heat a working material on the top surface of the platform (20), the working material including a thermoplastic film (70) and a cloth material (71), wherein the thermoplastic film (70) has a first side surface and a second side surface, and the first side surface of the thermoplastic film (70) has high temperature resistance higher than that of the second side surface of the thermoplastic film (70), so that when the heating device (30) heats the thermoplastic film (70), the second side surface of the thermoplastic film (70) and one surface of the cloth material (71) contacting with the thermoplastic film (70) melt, and the first side surface of the thermoplastic film (70) softens;
a vacuum means (40) arranged in the machine frame (10) and including a pipe (41) for coupling with the connector (21) of the platform (20), so that when a control valve (42) is turned on so as to drive the vacuum means (40) to draw the air out of the plurality of channels (22) via the pipe (41), the plurality of tiny holes (24) suck the working material downwardly, each tiny hole having a diameter of at least 0,001 mm and adapted to suck the working material downwardly;
a pressing die (50) movably disposed on a C-shaped rack (12) of the machine frame (10) and moving to and pressing the top surface of the platform (20); and
a gas barrier film (60) being flaky and intended to cover the top surface of the platform (20) completely, so that when the thermoplastic film (70) is placed on the top surface of the platform (20) the first side surface thereof faces downwardly and the cloth material (71) is placed on the thermoplastic film (70), the gas barrier film (60) covers the cloth material (71), when a negative pressure lower than atmospheric pressure is produced between the top surface of the platform (20) and the gas barrier film (60), the gas barrier film (60) presses the cloth material (71), and when the pressing die (50) moves downwardly, an upper side of the gas barrier film (60) presses downwardly.

2. The molding machine for making thermoplastic composites as claimed in claim 1, wherein the platform (20) also includes, at its top surface, a curved pattern portion (23).

3. The molding machine for making thermoplastic composites as claimed in claim 2, wherein the plural curved pattern portions (23) have a plurality of patterns.

4. The molding machine for making thermoplastic composites as claimed in claim 2, wherein the platform (20) also includes, at its top surface, a plurality of forming areas (25) with different depths, plural curved pattern portions (23) with a plurality of patterns in a plurality of separated areas, and the plurality of patterns match with the plurality of forming areas (25) so as to produce a working pattern.

## Patentansprüche

1. - Pressformmaschine zur Herstellung thermoplastischer Verbundwerkstoffe mit:
einem Maschinenrahmen (10) einschließlich einer Werkzeugstufe (11);
einer Plattform (20), die auf die Werkzeugstufe (11) montiert ist und eine Vielzahl von Kanälen (22) umfasst, die miteinander in Verbindung stehen, wobei die Plattform (20) auch eine Vielzahl von winzigen Löchern (24) umfasst, die auf einer Oberfläche der Plattform (20) angeordnet sind und in Verbindung mit der Vielzahl von Kanälen (22) stehen, wobei ein Verbindungsstück (21) an einer Seite davon befestigt ist und mit der Vielzahl von Kanälen (22) in Verbindung steht;
einer Erwärmungsvorrichtung (30), die auf einem Bodenende der Plattform (20) befestigt ist, zwischen der Werkzeugstufe (11) und der Plattform (20), und geeignet ist, ein Arbeitsmaterial auf der Oberseite der Plattform (20) zu erhitzen, wobei das Arbeitsmaterial eine thermoplastische Folie (70) und ein Stoffmaterial (71) umfasst, wobei die thermoplastische Folie (70) eine erste Seitenfläche und eine zweite Seitenfläche hat, und die erste Seitenfläche der thermoplastischen Folie (70) hat einen höheren Hochtemperaturwiderstand als die zweite Seitenfläche der thermoplastischen Folie (70), so dass, wenn die Erwärmungsvorrichtung (30) die thermoplastische Folie (70) erwärmt, die zweite Seitenfläche der thermoplastischen Folie (70) und eine Oberfläche des Stoffmaterials (71) in Kontakt mit der thermoplastischen Folie (70) schmelzen, und die erste Seitenfläche der thermoplastischen Folie (70) wird weich;
einem Vakuummittel (40), das in dem Maschinenrahmen (10) angeordnet ist und ein Rohrs (41) zur Verbindung mit dem Verbindungsstück (21) der Plattform (20) umfasst, so dass, wenn ein Steuerventil (42) eingeschaltet wird, um das Vakuummittel (40) anzutreiben, um die Luft aus der Vielzahl von Kanälen (22) durch das Rohr (41) zu saugen, saugt die Vielzahl von winzigen Löchern (24) das Arbeitsmaterial nach unten, wobei jedes winzige Loch einen Durchmesser von mindestens 0,001 mm umfasst und geeignet ist, um das Arbeitsmaterial nach unten zu saugen;
einem Presswerkzeug (50), das beweglich auf einem C-förmigen Gestell (12) des Maschinenrahmens (10) angeordnet ist und sich zur Oberseite der Plattform (20) hin bewegt und sie presst; und
einer Gasbarrierefolie (60), die schuppig ist und die Oberseite der Plattform (20) vollständig abdecken soll, so dass, wenn die thermoplastische Folie (70) auf der Oberseite der Plattform (20) gelegen ist und ihre erste Seitenfläche nach unten weist und das Stoffmaterial (71) auf die thermoplastische Folie (70) gelegt wird, bedeckt die Gasbarrierefolie (60) das Stoffmaterial (71), wenn ein Unterdruck niedriger als der Luftdruck zwischen der Oberseite der Plattform (20) und der Gasbarrierefolie (60) hergestellt wird, die Gasbarrierefolie (60) presst das Stoffmaterial (71), und wenn das Presswerkzeug (50) sich nach unten bewegt, presst eine Oberseite der Gasbarrierefolie (60) nach unten.

2. - Pressformmaschine zur Herstellung thermoplastischer Verbundwerkstoffe nach Anspruch 1, wobei die Plattform (20) auch, auf ihrer Oberseite, ein gebogenes Musterteil (23) umfasst.

3. - Pressformmaschine zur Herstellung thermoplastischer Verbundwerkstoffe nach Anspruch 2, wobei die Vielzahl von gebogenen Musterteilen (23) eine Vielzahl von Mustern hat.

4. - Pressformmaschine zur Herstellung thermoplastischer Verbundwerkstoffe nach Anspruch 2, wobei die Plattform (20) auch, auf ihrer Oberseite, eine Vielzahl von Pressformbereichen (25) mit verschiedenen Tiefen, eine Vielzahl von gebogenen Musterteilen (23) mit einer Anzahl von Mustern in vielen getrennten Bereichen umfasst und die Vielzahl von Mustern mit der Vielzahl von Pressformbereichen (25) übereinstimmen, so dass ein Arbeitsmuster entsteht.

## Revendications

1. - Machine de moulage permettant de fabriquer des composites thermoplastiques comprenant :
un bâti de machine (10) comprenant une platine de travail (11) ;
une plate-forme (20) montée sur la platine de travail (11) et comprenant une pluralité de canaux (22), et la pluralité de canaux (22) communiquant les uns avec les autres, la plate-forme (20) comprenant également une pluralité de trous minuscules (24) qui sont agencés sur une surface supérieure de la plate-forme (20), la pluralité de trous minuscules (24) étant en communication avec la pluralité de canaux (22), un raccord (21) fixé sur un côté de celle-ci et communiquant avec la pluralité de canaux (22) ;
un dispositif de chauffage (30) fixé sur une extrémité inférieure de la plate-forme (20), entre la platine de travail (11) et la plate-forme (20), et approprié pour chauffer un matériau de travail sur la surface supérieure de la plate-forme (20), le matériau de travail comprenant un film thermoplastique (70) et un matériau de tissu (71), le film thermoplastique (70) ayant une première surface latérale et une seconde surface latérale, et la première surface latérale du film thermoplastique (70) a une résistance aux températures élevées supérieure à celle de la seconde surface latérale du film thermoplastique (70), de telle sorte que, lorsque le dispositif de chauffage (30) chauffe le film thermoplastique (70), la seconde surface latérale du film thermoplastique (70) et une surface du matériau de tissu (71) en contact avec le film thermoplastique (70) fondent, et la première surface latérale du film thermoplastique (70) se ramollit ;
un moyen de vide (40) agencé dans le bâti de machine (10) et comprenant un tuyau (41) pour couplage au raccord (21) de la plate-forme (20), de telle sorte que, lorsqu'une vanne de commande (42) est actionnée de façon à amener le moyen de vide (40) à aspirer l'air hors de la pluralité de canaux (22) par l'intermédiaire du tuyau (41), la pluralité de trous minuscules (24) aspirent le matériau de travail vers le bas, chaque trou minuscules ayant un diamètre d'au moins 0,001 mm et étant adapté pour aspirer le matériau de travail vers le bas ;
une matrice de pressage (50) disposée de manière mobile sur un cadre en forme de C (12) du bâti de machine (10) et se déplaçant vers et appuyant sur la surface supérieure de la plate-forme (20) ; et
un film barrière aux gaz (60) lamellé et destiné à recouvrir la surface supérieure de la plate-forme (20) entièrement, de telle sorte que, lorsque le film thermoplastique (70) est placé sur la surface supérieure de la plate-forme (20), la première surface latérale de celui-ci est dirigée vers le bas et le matériau de tissu (71) est placé sur le film thermoplastique (70), le film barrière aux gaz (60) recouvre le matériau de tissu (71), lorsqu'une pression négative inférieure à la pression atmosphérique est produite entre la surface supérieure de la plate-forme (20) et le film barrière aux gaz (60), le film barrière aux gaz (60) appuie sur le matériau de tissu (71) et, lorsque la matrice de pressage (50) se déplace vers le bas, un côté supérieur du film barrière aux gaz (60) appuie vers le bas.

2. - Machine de moulage permettant de fabriquer des composites thermoplastiques selon la revendication 1, dans laquelle la plate-forme (20) comprend également, à sa surface supérieure, une partie de motif incurvée (23).

3. - Machine de moulage permettant de fabriquer des composites thermoplastiques selon la revendication 2, dans laquelle les différentes parties de motif incurvées (23) ont une pluralité de motifs.

4. - Machine de moulage permettant de fabriquer des composites thermoplastiques selon la revendication 2, dans laquelle la plate-forme (20) comprend également, à sa surface supérieure, une pluralité de zones de formage (25) avec différentes profondeurs, une pluralité de parties de motif incurvées (23) avec une pluralité de motifs dans une pluralité de zones séparées, et la pluralité de motifs correspondent à la pluralité de zones de formage (25) de façon à produire un motif de travail.
